**Europäisches Patentamt**

**European Patent Office**

**Office européen des brevets**

(19)

(11) Publication number : **0 148 420 B2**

(12) # NEW EUROPEAN PATENT SPECIFICATION

(45) Date of publication of the new patent specification : **23.12.92 Bulletin 92/52**

(51) Int. Cl.⁵ : **B60S 1/34**

(21) Application number : **84114817.4**

(22) Date of filing : **05.12.84**

(54) **Vehicle windscreen wiper with a single wiper blade.**

(30) Priority : **07.12.83 IT 6827583**

(43) Date of publication of application :
**17.07.85 Bulletin 85/29**

(45) Publication of the grant of the patent :
**09.12.87 Bulletin 87/50**

(45) Mention of the opposition decision :
**23.12.92 Bulletin 92/52**

(84) Designated Contracting States :
**DE FR GB**

(56) References cited :
**DE-C- 1 066 890**
**DE-C- 3 125 628**
**FR-A- 1 561 395**

(56) References cited :
**FR-A- 2 178 683**
**FR-A- 2 194 173**
**JP-U- 4 633 947**
**US-A- 1 660 971**

(73) Proprietor : **FIAT AUTO S.p.A.**
**Corso Giovanni Agnelli 200**
**I-10135 Torino (IT)**

(72) Inventor : **Cornacchia, Felice**
**Corso G. Agnelli 24**
**I-10100 Torino (IT)**
Inventor : **Di Giusto, Nevio**
**Via Guarini 48**
**I-10078 Venaria (IT)**

(74) Representative : **Prato, Roberto et al**
**STUDIO TORTA Società Semplice Via Viotti 9**
**I-10121 Torino (IT)**

EP 0 148 420 B2

## Description

This invention relates to an improved vehicle windscreen wiper, in particular of the single wiper blade type, i.e. in which a single arm carrying at its end a wiper blade holding member is rotated with reciprocating movement about the axis of a drive pin driven by a suitable motor, and on which the arm is keyed, in such a manner as to wipe the vehicle window (either the vehicle rear window or windscreen) alternately in one direction and the other with a substantially semicircular movement.

Known windscreen wipers of single wiper blade type have the drawback of wiping the window over a relatively small area constituted substantially by a circular sector concentric with the axis of rotation of the wiper blade support arm and extending substantially from one end of the window to the other along an arc generally less than 180°. In this manner, the two upper side corners of the window are substantially not subjected to the wiping action of the windscreen wiper, and thus the visibility is relatively reduced in the case of bad weather. In order to overcome this drawback, in FR 2 178 683 it has been proposed a windscreen wiper able to move the single wiper blade in a direction radial to the axis of rotation of the wiper arm, simultaneously with the rotation of the latter; the solution described in FR 2 178 683 consists in a rod-crank mechanism built separately from the wiper arm and connecting the arm with the rotating pin from which it receives its circular motion. This solution however presents the drawbacks consisting in that the radial movement of the arm can disturb the vision of the driver and simultaneously charges the wiper arm with lateral stresses which can interfere with the rotation of the same and however increase the wearing of the rotating elements.

In JP-U-46 33 947 is shown another windscreen wiper able to move the single wiper blade in a direction substantially radial to the axis of rotation of the wiper arm, under the action of a rod-crank mechanism; in this solution, the arm supporting the wiper blade holding member is the rod of the rod-crank mechanism, but the crank is connected between the said rod and a rotatable reciprocating pin, while the rotatable reciprocating movement to a main supporting arm is transmitted by means of a couplement of two external gear wheels, with a construction relatively more complicated and bulky.

One object of the present invention is to provide an improved vehicle windscreen wiper, in particular of the aforesaid single wiper blade type, which is able to offer high visibility in the case of bad weather by wiping a relatively large portion of the window on which it acts, while having a simple structure of low cost. A further object of the present invention is to provide a windscreen wiper of the single wiper blade type which is able to wipe at least part of the upperside corners of the window on which it acts without affecting the vision of the driver and the resistance of the rotating parts of the wiper itself. Said objects are attained according to the present invention by a vehicle windscreen wiper of the type comprising a first arm, a wiper blade holding member disposed rigidly on one end of said first arm, a second arm supporting said first arm and mounted by means of a pin for reciprocating rotational movement about the axis of said pin, and transmission means for transmitting to said first arm a motion which is relative to said second arm so as to cause said wiper blade holding member to translate in a direction substantially radial to the axis of said pin simultaneously with the rotation of said second arm, said second arm being mounted at an intermediate point on said pin, said transmission means comprising a connecting rod-crank mechanism connecting the first arm to the second arm in a zone outside of said pin and there being at least one pair of gear wheels for operating said connecting rod-crank mechanism as the result of a rotation of said second arm about the axis of said pin,

characterised in that

said pin is a rotatable pin, said second arm being keyed on to said rotatable pin which is able to transmit to said second arm a reciprocating rotational movement about the axis of said pin, said first arm is the rod of said rod-crank mechanism, said first arm assuming different inclinations with respect to said second arm during the rotational movement of the said pin, said mechanism comprising a crank connected between a first end of said second arm and a second end of said first arm, distant from said wiper blade holding member, and comprising a fixed ring gear disposed concentrically to said rotatable pin and internally toothed, a pinion engaging with said ring gear and mounted idly on a first end of said second arm, said crank being keyed in an angularly rigid manner on to said pinion and hinged to the second end of said first arm, distant from said wiper blade holding member and there being a connection element carried by the second end of said second arm distant from the first and engaging in a longitudinal slot provided in an intermediate portion of said first arm over a predetermined length.

The present invention will be more apparent from the non-limiting description of one embodiment given hereinafter with reference to the accompanying drawings, in which:

Figure 1 is a front view of a windscreen wiper constructed in accordance with the present invention;

Figures 2 and 3 show the windscreen wiper of Figure 1 in two different operating positions, to a reduced scale.

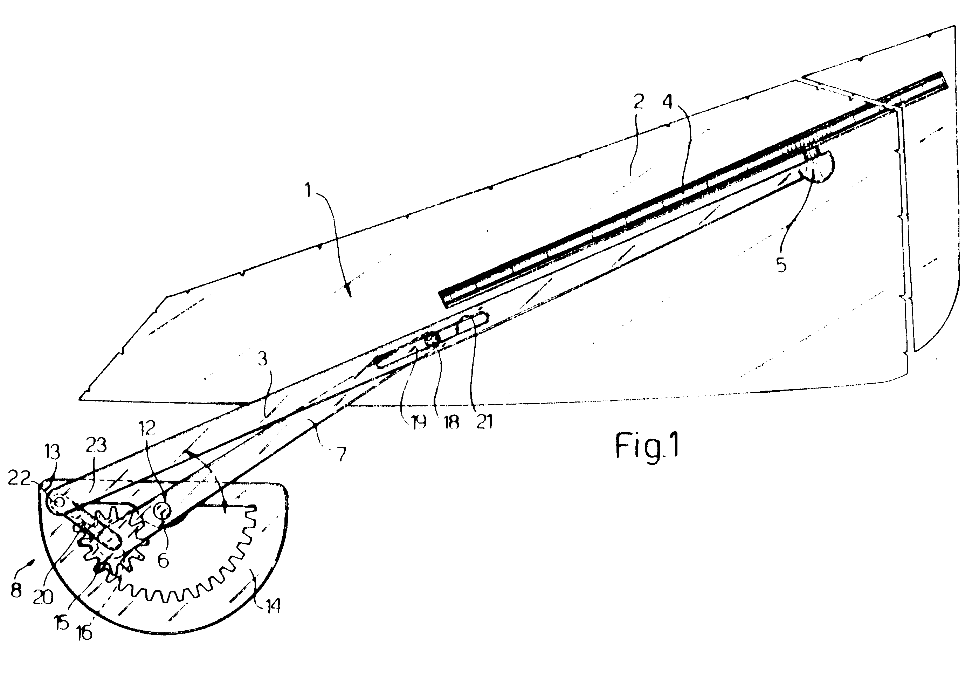

In Figure 1, the reference numeral 1 indicates overall a vehicle windscreen wiper of the single wiper blade type, arranged to wipe a window 2, for example the front windscreen (or rear window) of a vehicle of any type, not shown for simplicity. The windscreen wiper 1 comprises an arm 3 and a wiper blade holding member 4 of known type disposed rigidly on one end 5 of said arm 3, and is driven by a rotatable pin 6 arranged to rotate with reciprocating movement about its own axis in the direction of the arrows along an angular arc of a predetermined value, which is generally less than 180°, said pin 6 being carried by the vehicle on which the windscreen wiper 1 is mounted, and being driven by a suitable known motor, not shown for simplicity.

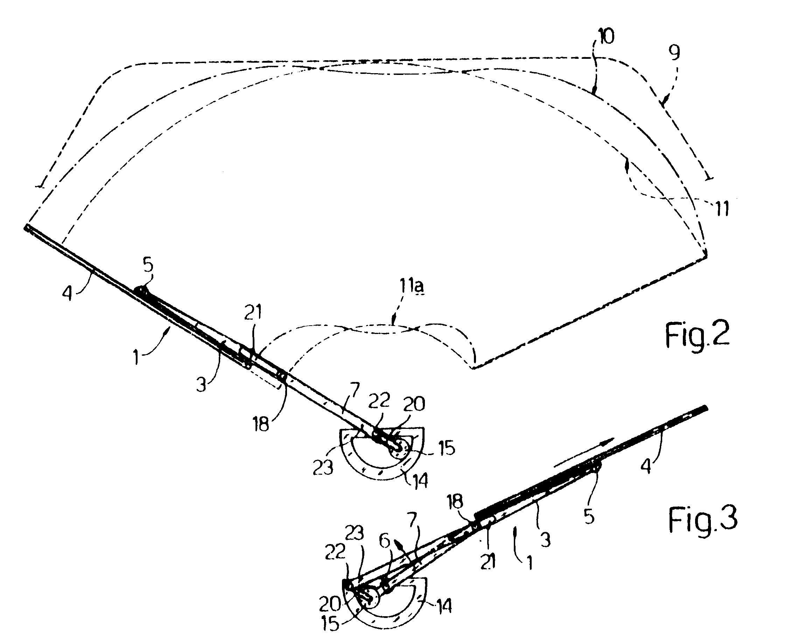

According to the invention, the windscreen wiper 1 also comprises an arm support member 7 keyed in any known manner, for example by means of a splined joint, on to the pin 6 so as to project radially therefrom and be angularly rigid therewith during its reciprocating rotary motion along said angular arc of predetermined value, said member 7 supporting the arm 3 and at least part of suitable transmission means, indicated overall by 8 and arranged to transmit to the arm 3 a movement which is relative to the arm support member 7 in such a manner as to cause the wiper blade holding member 4 and the arm 3 rigid therewith to undergo translatory movement in a direction substantially radial to the axis of the rotatable pin 6 simultaneously with the rotation of the arm support member 7 about the axis of said pin 6. Consequently, the arm 3 and relative wiper blade holding member 4 are subjected to a composite rotational movement about the axis of the pin 6 rigidly with the arm support member 7, and to a translatory movement along this latter in a direction substantially radial to said pin 6, and due to the motion transmitted by this latter to the arm 3 by way of the transmission means 8. The result of this composite movement of the wiper blade holding member 4 and of the relative arm 3 is an enlargement of the surface wiped by the windscreen wiper 1 compared with a windscreen wiper of the single wiper blade type having the same dimensions, as is well apparent from Figure 2. In this figure, the dashed line 9 diagrammatically indicates the contour of the upper edge of the window 2, the dashed and dotted line 10 indicates the profile of the area wiped by the windscreen wiper of the invention, and the dashed line 11 indicates the profile of the available wiped area if the arm 3 had been directly keyed in an angularly rigid manner on the pin 6 as in the case of windscreen wipers with single wiper blades of known type.

In the preferred embodiment of the invention, said arm support member 7 is constituted by a second arm which is keyed to the pin 6 at an intermediate point 12 thereof instead of at its lower end, and said transmission means comprise a connecting rod-crank mechanism 13 which connects the arm 3 to the second arm 7 eccentrically to the pin 6, and at least one pair of gear wheels for operating said connecting rod-crank mechanism 13 as the result of a rotation of the arm 7 about the axis of said pin 6. In particular, the windscreen wiper 1 according to the invention comprises a fixed ring gear 14 disposed concentrically to the pin 6 and mounted rigid with the body of the vehicle carrying said pin 6, for example by being housed in a suitable seat, not shown for simplicity, formed in said vehicle in a position below the window 2, a pinion 15 engaging with the ring gear 14 and mounted idly on an end 16 of the arm 7, a connection element 18, preferably constituted by a suitable pin and carried by the second end 19 of the arm 7 distant from the end 16, and a crank 20 keyed in an angularly rigid manner on the pinion 15 and connecting the end 16 to the arm 3. The element or pin 18 engages a longitudinal slot 21 provided in an intermediate portion of the arm 3 over a predetermined length, and slidably connects this latter to the arm 7, and the crank 20 is hinged at 22 to the lower end 23 of the arm 3 distant from the end 5, to define the said connecting rod-crank mechanism 13 in cooperation with said arm 3, the slot 21 and the pin 18. The pitch circle diameter of the ring gear 14 and pinion 15, and the number of teeth thereon are chosen in such a manner as to determine a transmission ratio therebetween such that the pinion 15 is compelled to make at least one complete revolution about its own axis for each stroke of reciprocating rotation of the arm 7 about the axis of the pin 6, i.e. for each complete angular movement of rotation of said pin 6.

The operation of the windscreen wiper 1 according to the invention is described hereinafter with reference to Figures 2 and 3, which show it in its two opposing end-of-stroke positions. As stated heretofore, in a windscreen wiper of known type, the arm 3 is directly keyed on to the pin 6 and consequently the reciprocating rotation thereof in the direction of the arrow (Figure 1) causes the member 4 to move along a semicircular trajectory defined upperly by the profile 11. This trajectory prevents the windscreen wiper 1 wiping the upper corner portions defined by the profile 9.

In the windscreen wiper 1 of the invention, the arm 7 is keyed on to the pin 6 and therefore moves in the aforesaid manner, i.e. along a semicircular trajectory, to cause the pin 18 to undergo the trajectory defined in Figure 2 by a lower profile 11a. Consequently the pinion 15, being disposed eccentrically to the pin 6, is also rotated about said pin 6 in the opposite direction to the pin 18, along a semicircular trajectory coinciding substantially with the inner profile of the ring gear 14. In the same manner as the planet gear of an epicyclic reduction gear unit, the pinion 15, which engages with the ring gear 14, is obliged by this latter to rotate about its own axis as a consequence of the movement thereof along said ring gear 14. Assuming that the initial position of the wiping stroke of the windscreen wiper 1 is that shown in Figure 3, rotating the arm 7 in the direction of the arrow causes the crank 20, rigid with the pinion 15, to rotate in such a direction as to reduce the angle between itself and the arm 7, the result being to cause the point 22 to rotate about the end 16 and thus the arm 3 to undergo longitudinal translatory movement relative to the arm 7, with the pin 18 sliding in the slot 21.

This causes the member 4 to move with translatory motion in the direction of the arrow 3 (Figure 3), accompanied by a slight rocking of the arm 3 which, simultaneously both increases the speed of member 4 just on the most critical zones of window 2 for visibility and increase the angle covered by the semicircular trajectory of member 4 itself too, this angle being dependent on the position of crank 20. By suitably choosing the transmission ratio between the ring gear 14 and pinion 15 and the lengths of the crank 20, arm 7 and slot 21, this position of the arm 3 can be attained at the first upper corner of the window 2, and thus the member 4 describes the undulated trajectory defined in Figure 2 by the profile 10. It is obvious that the trajectory 10 is undulated because if the pin 6 continues rotating, the crank 20 passes beyond its top dead centre position and causes the member 4 to translate in the opposite direction towards the pin 6. At about the middle of the rotation stroke of the pin 6, the crank 20 attains its bottom dead centre, and when it passes this the member 4 begins to withdraw from the pin 6 so as to also wipe the other upper corner of the window 2, to again attain for example its maximum elongation position (Figure 2) on termination of the stroke of the arm 7. At this point, the pin 6 reverses its movement, and the return stroke follows the same law of motion, until the windscreen wiper 1 has returned to its end-of-stroke position of Figure 3.

The considerable constructional simplicity and high efficiency of the windscreen wiper 1 according to the invention is apparent from the description, and it is also apparent that modification can be made to the described embodiment, but without leaving the scope of the inventive idea as defined in the claims. For example, the end-of-stroke position could be the position of minium elongation, symmetrical with the starting position.

## Claims

1. A vehicle windscreen wiper (1) of the type comprising a first arm (3), a wiper blade holding member (4) disposed rigidly on one end (5) of said first arm (3), a second arm (7) supporting said first arm (3) and mounted by means of a pin (6) for reciprocating rotational movement about the axis of said pin (6), and transmission means (8) for transmitting to said first arm (3) a motion which is relative to said second arm (7) so as to cause said wiper blade holding member (4) to translate in a direction substantially radial to the axis of said pin (6) simultaneously with the rotation of said second arm (7), said second arm (7) being mounted at an intermediate point (12) on said pin (6), said transmission means (8) comprising a connecting rod-crank mechanism (13) connecting the first arm (3) to the second arm (7) in a zone outside of said pin (6) and there being at least one pair of gear wheels (14, 15) for operating said connecting rod-crank mechanism (13) as the result of a rotation of said second arm (7) about the axis of said pin (6),

characterised in that

said pin (6) is a rotatable pin, said second arm (7) being Keyed on to said rotatable pin (6) which is able to transmit to said second arm (7) a reciprocating rotational movement about the axis of said pin (6), said first arm (3) is the rod of said rod-crank mechanism (13), said first arm (3) assuming different inclinations with respect to said second arm (7) during the rotational movement of the said pin (6), said mechanism comprising a crank (20) connected between a first end (16) of said second arm (7) and a second end (22) of said first arm (3), distant from said wiper blade holding member (4), and comprising a fixed ring gear (14) disposed concentrically to said rotatable pin (6) and internally toothed, a pinion (15) engaging with said ring gear (14) and mounted idly on the first end (16) of said second arm (7), said crank (20) being keyed in an angularly rigid manner on to said pinion (15) and hinged to the second end (22) of said first arm (3), distant from said wiper blade holding member (4) and there being a connection element (18) carried by the second end (17) of said second arm (7) distant from the first and engaging in a longitudinal slot (21) provided in an intermediate portion of said first arm (3) over a predetermined length.

2. A windscreen wiper (1) as claimed in Claim 1, characterised in that the transmission ratio between said ring gear (14) and said pinion (15) is such that this latter is obliged to make at least one complete rotation for each reciprocating rotation-stroke of said second arm (7) about the axis of said pin (6).

## Patentansprüche

1. Scheibenwischer (1) mit einem ersten Arm (3), einem starr an einem Ende (5) dieses Arms (3) angeordneten Wischerblatt halter (4), einem zweiten Arm (7), der den ersten Arm (3) trägt und über einen Zapfen (6) um dessen Achse schwenkbar angeordnet ist, und Übertragungsmitteln (8), mit denen auf den ersten Arm (3) eine Bewegung relativ zum zweiten Arm (7) derart übertragen werden kann, daß der Wischerblatthalter (4) sich gleichzeitig mit der Drehung des zweiten Arms (7) in einer Richtung im wesentlichen radial zur Achse des Schwenkzapfens (6) bewegt, wobei der zweite Arm (7) in einer zwischenposition (12) an dem Schwenkzapfen (6) befestigt ist, die Übertragungseinrichtung (8) ein den ersten Arm (3) und den zweiten Arm (7) in einem Bereich außerhalb des Schwenkzapfens (6) verbindendes Kurbelgestänge (13) besitzt und mindestens ein zahnräderpaar (14,15) vorgesehen ist, das das verbindende Kurbelgestänge (13) betätigt, wenn der zweite Arm (7) um die Schwenkzapfenachse (6) verschwenkt, dadurch gekennzeichnet,

daß der Zapfen (6) ein Schwenkzapfen ist, daß der zweite Arm (7) auf dem Schwenkzapfen (6) so aufgekeilt ist, daß dieser ihm eine Schwenkbewegung um die Schwenkzapfenachse (6) vermittelt, daß der erste Arm (3) die Stange des Kurbelgestänges (13) bildet, wobei der erste Arm (3) während der Drehbewegung des Schwenkzapfens (6) unterschiedliche Neigun gen relativ zu dem zweiten Arm (7) einnimmt, daß das Kurbel gestänge eine Kurbel (20) umfaßt, die zwischen einem ersten Ende (16) des zweiten Arms (7) und einem zweiten (22), dem Wischerblatthalter (4) gegenüberliegenden Ende des ersten Arms (3) vorgesehen ist, und ferner einen feststehenden, innen verzahnten und konzentrisch zum Schwenkzapfen (6) angeordneten Zahnring (14) und ein in diesen eingreifendes, auf einem ersten Ende (16) des zweiten Arms (7) freilaufend montiertes Zahnritzel (15) aufweist, wobei die Kurbel (20) in einer starren Winkelausrichtung an dem Ritzel (15) befestigt und an dem zweiten, dem Wischerblatthalter (4) gegenüberliegenden Ende (22) des ersten Arms (3) gelenkig gelagert ist und wobei das zweite, dem ersten Ende gegenüberliegende Ende (17) des zweiten Arms (7) ein Verbin dungselement (18) trägt, das in einen langgestreckten Schlitz (21) vorbestimmter Länge eingreift, der in einem zwischenbereich des ersten Arms (3) vorgesehen ist.

2. Scheibenwischer (1) nach Anspruch 1, dadurch gekennzeichnet, daß das Übertragungsverhältnis zwischen dem Zahnring (14) und dem Ritzel (15) derart ist, daß das Ritzel (15) gezwungen ist, bei jeder Schwenkbewegung des zweiten Arms (7) um die Achse des Schwenkzapfens (6), mindestens eine volle Umdrehung zu vollführen.

**Revendications**

1. Essuie-glace de pare-brise de véhicule (1) du type comprenant un premier bras (3), un élément porte-balai (4) solidaire d'une extrémité (5) du premier bras (3), un deuxième bras (7) monté au moyen d'un arbre (6) de façon à effectuer un mouvement de rotation alternatif autour de l'axe de l'arbre (6), et des moyens de transmission (8) pour transmettre audit premier bras (3) un déplacement par rapport audit deuxième bras (7) pour amener l'élément porte-balai (4) à se déplacer d'un mouvement de translation dans une direction pratiquement radiale par rapport à l'axe de l'arbre (6) en même temps que tourne le deuxième bras (7), le deuxième bras (7) étant monté en un point intermédiaire (12) sur l'arbre (6), lesdits moyens de transmission (8) comprenant un mécanisme bielle-manivelle (13) reliant le premier bras (3) au deuxième bras (7) dans une zone extérieure à l'arbre (6) et au moins deux roues dentées (14, 15) étant présentes pour actionner ce mécanisme de liaison bielle-manivelle (13) du fait de la rotation du deuxième bras (7) autour de l'axe de l'arbre (6),

caractérisé en ce que

ledit arbre (6) est un arbre tournant, ledit deuxième arbre (7) étant claveté sur l'arbre tournant (6) qui est propre à transmettre au deuxième bras (7) un mouvement de rotation alternatif autour de l'axe de l'arbre (6), que ledit premier bras (3) est la bielle dudit mécanisme bielle-manivelle (13), le premier bras (3) prenant différentes inclinaisons par rapport au deuxième bras (7) au cours du mouvement de rotation de l'arbre (6), ledit mécanisme comprenant une manivelle (20) reliée entre une première extrémité (16) du deuxième bras (7) et une deuxième extrémité (22) du premier bras (3), éloignée de l'élément porte-balai (4), et comprenant une couronne dentée fixe (14) disposée concentriquement à l'arbre tournant (6) et dentée intérieurement, un pignon (15) engrenant avec la couronne dentée (14) et monté, fou, sur la première extrémité (16) du deuxième bras (7), ladite manivelle (20) étant clavetée sur le pignon (15) de façon à en être angulairement solidaire et articulée sur la deuxième extrémité (22) du premier bras (3) éloignée de l'élément porte-balai (4) et un élément de liaison (18) étant porté par la deuxième extrémité (17) du deuxième bras (7) éloignée de la première extrémité et coopérant avec une fente longitudinale (21) ménagée dans une portion intermédiaire du premier bras (3) sur une longueur prédéterminée.

2. Essuie-glace de pare-brise (1) selon la revendication 1, caractérisé en ce que le rapport de transmission entre la couronne dentée (14) et le pignon (15) est tel que ce dernier est obligé d'effectuer au moins une révolution complète pour chaque course de pivotement alternatif du deuxième bras (7) autour de l'axe de l'arbre (6).

Fig.1

Fig.2

Fig.3

EP 0 148 420 B2